(19) Europäisches Patentamt
European Patent Office
Office européen des brevets

(11) EP 3 943 300 B1

(12) **EUROPEAN PATENT SPECIFICATION**

(45) Date of publication and mention of the grant of the patent:
**18.10.2023 Bulletin 2023/42**

(21) Application number: **20772785.0**

(22) Date of filing: **16.03.2020**

(51) International Patent Classification (IPC):
***B32B 27/32*** *(2006.01)* ***C08K 5/20*** *(2006.01)*
***C08L 23/00*** *(2006.01)* ***C08L 23/10*** *(2006.01)*
***C08L 23/16*** *(2006.01)* ***C08L 61/00*** *(2006.01)*
***C08L 91/00*** *(2006.01)* ***C08L 101/00*** *(2006.01)*
***C09K 3/10*** *(2006.01)* ***C08K 5/13*** *(2006.01)*
***C08K 5/17*** *(2006.01)*

(52) Cooperative Patent Classification (CPC):
(C-Sets available)
**C08L 91/00; B32B 27/08; B32B 27/18; B32B 27/32; C08K 5/20; C08L 23/12; C08L 61/14;**
B32B 2250/02; B32B 2250/242; B32B 2270/00; B32B 2274/00; B32B 2307/536; B32B 2307/54; B32B 2419/00; B32B 2605/00; (Cont.)

(86) International application number:
**PCT/JP2020/011501**

(87) International publication number:
**WO 2020/189633 (24.09.2020 Gazette 2020/39)**

# (54) THERMOPLASTIC ELASTOMER COMPOSITION AND MOLDED BODY OF SAME

THERMOPLASTISCHE ELASTOMERZUSAMMENSETZUNG UND FORMARTIKEL DARAUS

COMPOSITION D'ÉLASTOMÈRE THERMOPLASTIQUE ET CORPS MOULÉ À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2019 JP 2019049728**

(43) Date of publication of application:
**26.01.2022 Bulletin 2022/04**

(73) Proprietor: **Mitsui Chemicals, Inc.**
**Tokyo 104-0028 (JP)**

(72) Inventors:
- **SHIBATA, Yasuhiro**
  **Sodegaura-shi, Chiba 299-0265 (JP)**
- **YODA, Yusuke**
  **Sodegaura-shi, Chiba 299-0265 (JP)**
- **CHIGAMA, Kakeru**
  **Sodegaura-shi, Chiba 299-0265 (JP)**
- **YAMAMOTO, Akihiro**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 850 991** **EP-A1- 1 453 912**
**EP-A1- 1 510 549** **EP-A1- 2 066 745**
**JP-A- 2000 212 351** **JP-A- 2006 265 367**
**JP-A- 2011 052 031** **JP-A- 2013 067 818**
**JP-A- 2016 000 485** **US-A- 5 750 625**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08K 5/0016; C08L 2205/22; C09K 3/1006;
C09K 2003/1053; C09K 2200/0645

C-Sets
**C08L 23/12, C08L 23/16, C08L 57/02;**
**C08L 23/12, C08L 23/16, C08L 57/02, C08K 5/02, C08K 5/20;**
**C08L 23/12, C08L 23/16, C08L 91/00, C08K 5/13, C08K 5/17**

## Description

### Technical Field

The present invention relates to a thermoplastic elastomer composition and a molded article of the same.

### Background Art

Known molded articles made of a thermoplastic elastomer material including a rubber component, a resin component and the like are those having a multi-layer structure with a slidable covering body formed on the surface (for example, a part required slidability) of a substrate constituting the molded article. Examples of such a molded article having a multi-layer structure include an automotive glass run channel.

Materials used for the slidable covering body of an automotive glass run channel are required to have well-balanced various properties. Examples of such properties include particularly oil resistance, reduced oil bleeding at a high temperature (hereinafter, also written as the "heat aging resistance"), hardness, and mechanical strengths.

Concerning the heat ageing resistance, some consider that when the covering body made of materials including a softener is laminated on the substrate (glass run channel itself), the difference in the concentrations between the softener in the covering body and the softener in the substrate causes the softener (oil) to migrate and allows a bleeding phenomenon to occur.

In Patent Literature 1, an attempt was made to improve heat aging resistance (to reduce the surface stickiness at a high temperature exposure) by trying different laminate configurations, specifically achieving "a ratio of an oil softener (oil) with respect to the amorphous component amount in the surface layer material (sliding material) ≥ a ratio of an oil softener with respect to the amorphous component amount in the lower layer material." The thermoplastic elastomer described as constituting the surface layer material and the lower layer material are those obtained by dynamically heat treating 10 to 60 parts by weight of a polyolefin resin, 30 to 70 parts by weight of an ethylene·$\alpha$-olefin·nonconjugated polyene copolymer and 5 to 50 parts by weight of oil softeners (the total of these is 100 parts by weight) in the presence of a cross-linking agent.

In the multi-layer structure elastomer molded article with a covering body formed on the surface of a substrate disclosed in Patent Literature 2, "a ratio of a softener (oil) in the covering body/a ratio of a softener in the substrate is 0.00 or more and less than 0.30." The covering body material in examples contains 200 phr of polypropylene based on 100 phr of EPDM. However, this literature does not describe strengths and the like of the molded article.

Patent Literature 3 discloses a polyolefin resin composition for surface skin member in which polypropylene, a filler, fatty acid amide and the like are added to a completely or partially cross-linked thermoplastic elastomer. This literature does not describe the hardness, mechanical strengths and the like of the molded article formed from the composition.

### Citation List

#### Patent Literature

Patent Literature 1: JP2001-138440A
Patent Literature 2: JP2016-000485A
Patent Literature 3: JPH9-176408A

### Summary of Invention

#### Technical Problem

However, conventional slidable thermoplastic elastomer compositions and molded articles made therefrom have room for further improvements in various properties. For example, the surface layer material of Patent Literature 1 had difficulty in increasing hardness the amount of oil softeners was large.

An object of the present invention is to provide a thermoplastic elastomer composition with excellent heat aging resistance and also excellent hardness and mechanical properties (tensile elasticity and tensile breaking strength) as well as excellent moldability, and a molded article and the like using such compositions.

Solution to Problem

[1] A thermoplastic elastomer composition (I) comprising:
a cross-linked product of an ethylene·α-olefin-nonconjugated polyene copolymer (A) (provided that the α-olefin has 3 to 20 carbon atoms) with a phenolic resin cross-linking agent (E), the composition (I) further comprising:

360 to 460 parts by mass of a crystalline polyolefin (B),
70 to 140 parts by mass of a softener (C), and
2 to 6 parts by mass of a lubricant (D) (provided that an amount of the copolymer (A) is 100 parts by mass).

[2] The thermoplastic elastomer composition (I) according to [1], wherein the ethylene·α-olefin·nonconjugated polyene copolymer (A) satisfies the following requirement (a1):
requirement (a1): a molar ratio of an ethylene-derived structural unit (e) to an α-olefin-derived structural unit (o) [(e)/(o)] is 50/50 to 85/15.
[3] The thermoplastic elastomer composition (I) according to [1] or [2], wherein the crystalline polyolefin (B) has a melting point of 150 to 170°C when measured by differential scanning calorimetry.
[4] The thermoplastic elastomer composition (I) according to any of [1] to [3], wherein the crystalline polyolefin (B) is a propylene polymer.
[5] The thermoplastic elastomer composition (I) according to any of [1] to [4], wherein the softener (C) is a paraffin oil.
[6] The thermoplastic elastomer composition (I) according to any of [1] to [5], wherein the lubricant (D) is erucic acid amide.
[7] The thermoplastic elastomer composition (I) according to any of [1] to [6], obtained by dynamically heat treating the ethylene·α-olefin·nonconjugated polyene copolymer (A) and at least a part of the crystalline polyolefin (B) in the presence of the phenolic resin cross-linking agent (E).
[8] The thermoplastic elastomer composition (I) according to any of [1] to [7], wherein an amount of the phenolic resin cross-linking agent (E) is 2 to 9 parts by mass with respect to 100 parts by mass of the copolymer (A).
[9] A molded article comprising the thermoplastic elastomer composition (I) according to any of [1] to [8].
[10] A laminate comprising a layer comprising the thermoplastic elastomer composition (I) according to any of [1] to [8] and a layer comprising a soft material,wherein these layers are laminated.
[11] The laminate according to [10], wherein the soft material has a hardness (A hardness) of 65 to 95.
[12] The laminate according to [11], wherein the soft material comprises a thermoplastic elastomer.
[13] The laminate according to [12], wherein the soft material comprises a thermoplastic elastomer composition (II) comprising a thermoplastic elastomer, and the composition (II) comprises a softener, and a mass fraction ($W_{2c}$) of the softener in the composition (II) is 30 to 50 mass%.
[14] The laminate according to [13], wherein a ratio of a mass fraction ($W_{1c}$) of the softener (C) in the thermoplastic elastomer composition (I) to the mass fraction ($W_{2c}$) of the softener in the thermoplastic elastomer composition (II) ($W_{1c}/W_{2c}$) is 0.60 or less.
[15] An article comprising the laminate according to any of [10] to [14].
[16] The article according to [15], being a window frame seal, a glass run channel, or a building gasket.

Advantageous Effect of Invention

The thermoplastic elastomer composition of the present invention has excellent heat aging resistance and also has excellent hardness and mechanical properties (tensile elasticity, tensile breaking strength), as well as excellent moldability.
The molded article and the laminate of the present invention have excellent heat aging resistance and also have excellent hardness and mechanical properties (tensile elasticity, tensile breaking strength).

Description of Embodiments

[Thermoplastic elastomer composition (I)]

The thermoplastic elastomer composition (I) according to the present invention is characterized by comprising a heat-treated product obtained by dynamically heat treating an ethylene·α-olefin·nonconjugated polyene copolymer (A) or a mixture containing the copolymer (A) in the presence of a phenolic resin cross-linking agent (E) capable of cross-linking the copolymer (A) (a cross-linked product of the copolymer (A) with the cross-linking agent (E)), and further

comprising a crystalline polyolefin (B), a softener (C), and a lubricant (D).

<Ethylene·α-olefin·nonconjugated polyene copolymer (A)>

The ethylene·α-olefin·nonconjugated polyene copolymer (A) used in the present invention (hereinafter, also simply written as the "copolymer (A)") is an ethylene·α-olefin·nonconjugated polyene copolymer including an ethylene-derived structural unit, at least one α-olefin-derived structural unit having 3 to 20 carbon atoms, and at least one nonconjugated polyene-derived structural unit.

Examples of the α-olefin having 3 to 20 carbon atoms include linear α-olefins with no side chain such as propylene (3 carbon atoms), 1-butene (4 carbon atoms), 1-nonene (9 carbon atoms), 1-decene (10 carbon atoms), 1-nonadecen (19 carbon atoms), and 1-eicosen (20 carbon atoms); and α-olefins with side chains such as 4-methyl-1-pentene, 9-methyl-1-decene, 11-methyl-1-dodecene, and 12-ethyl-1-tetradecene. These α-olefins may be used singly, or two or more may be used in combination. Of these, propylene is preferable considering the heat resistance.

Examples of the nonconjugated polyene include chain nonconjugated dienes such as 1,4-hexadiene, 1,6-octadiene, 2-methyl-1,5-hexadiene, 6-methyl-1,5-heptadiene, and 7-methyl-1,6-octadiene; cyclic nonconjugated dienes such as cyclohexadiene, dicyclopentadiene, methyltetrahydroindene, 5-vinyl-2-norbornene, 5-ethylidene-2-norbornene, 5-methylene-2-norbornene, 5-isopropylidene-2-norbornene, and 6-chloromethyl-5-isopropenyl-2-norbornene; and triens such as 2,3-diisopropylidene-5-norbornene, 2-ethylidene-3-isopropylidene-5-norbornene, 2-propenyl-2,5-norbornadiene, 1,3,7-octatriene, 1,4,9-decatriene, 4,8-dimethyl-1,4,8-decatriene, and 4-ethylidene-8-methyl-1,7-nonadiene. These nonconjugated polyenes may be used singly, or two or more may be used in combination. Of these, cyclic nonconjugated dienes such as 1,4-hexadiene, 5-ethylidene-2-norbornene, 5-vinyl-2-norbornene, and mixtures of 5-ethylidene-2-norbornene, and 5-vinyl-2-norbornene are preferable, and 5-ethylidene-2-norbornene and 5-vinyl-2-norbornene is more preferable.

Examples of the copolymer (A) include ethylene·propylene·1,4-hexadiene copolymers, ethylene·1-pentene·1,4-hexadiene copolymers, ethylene·1-hexene·1,4-hexadiene copolymers, ethylene·1-heptene·1,4-hexadiene copolymers, ethylene·1-octene·1,4-hexadiene copolymers, ethylene·1-nonene·1,4-hexadiene copolymers, ethylene·1-decene·1,4-hexadiene copolymers, ethylene·propylene·1-octene·1,4-hexadiene copolymers, ethylene·propylene·5-ethylidene-2-norbornene copolymers, ethylene·1-pentene·5-ethylidene-2-norbornene copolymers, ethylene·1-hexene·5-ethylidene-2-norbornene copolymers, ethylene·1-heptene·5-ethylidene-2-norbornene copolymers, ethylene·1-octene·5-ethylidene-2-norbornene copolymers, ethylene·1-nonene·5-ethylidene-2-norbornene copolymers, ethylene·1-decene·5-ethylidene-2-norbornene copolymers, ethylene·propylene·1-octene·5-ethylidene-2-norbornene copolymers, ethylene·propylene·5-ethylidene-2-norbornene·5-vinyl-2-norbornene copolymers, ethylene·1-pentene·5-ethylidene-2-norbornene·5-vinyl-2-norbornene copolymers, ethylene·1-hexene·5-ethylidene-2-norbornene·5-vinyl-2-norbornene copolymers, ethylene·1-heptane·5-ethylidene-2-norbornene·5-vinyl-2-norbornene copolymers, ethylene·1-octene·5-ethylidene-2-norbornene·5-vinyl-2-norbornene copolymers, ethylene·1-nonene·5-ethylidene-2-norbornene·5-vinyl2-norbornene copolymers, ethylene·1-decene·5-ethylidene-2-norbornene·5-vinyl-2-norbornene copolymers, and ethylene·propylene·1-octene·5-ethylidene-2-norbornene·5-vinyl-2-norbornene copolymers.

The copolymer (A) may be used singly, or two or more may be used in combination.

The copolymer (A) preferably satisfies the following requirement (a1). The copolymer (A) more preferably satisfies requirement (a2) and further preferably satisfies requirement (a3) together with the requirements (a1) and (a2) .

Requirement (a1): a molar ratio of an ethylene-derived structural unit (e) to an α-olefin-derived structural unit (o) [(e)/(o)] is 50/50 to 85/15, and preferably 60/40 to 80/20.

Requirement (a2): a proportion of a nonconjugated polyene-derived structural unit in all structural units of the copolymer (A) is 0.5 to 6.0 mol%.

Requirement (a3): an intrinsic viscosity [η] measured in decalin at 135°C is 1.0 to 10 dL/g, and preferably 1.5 to 8 dL/g.

(Method for producing the copolymer (A))

The copolymer (A) can be produced by, for example the method described in WO2018/181121, paragraphs [0028] to [145].

<Crystalline polyolefin (B)>

The crystalline polyolefin (B) is not particularly limited as long as it is a crystalline polymer obtained from olefins but is preferably a polymer made of a crystalline high molecular weight solid product obtained by polymerizing one or more monoolefins by a high pressure method or a low pressure method. Examples of such a polymer include isotactic monoolefin polymers and syndiotactic monoolefin polymers.

The crystalline polyolefin (B) can be synthesized by a conventionally known method, or a commercial product can be used.

The crystalline polyolefin (B) may be used singly, or two or more may be used in combination.

Examples of the olefin to be used as the ingredient of the crystalline polyolefin (B) include $\alpha$-olefins having 2 to 20 carbon atoms (excluding propylene) such as ethylene, propylene, 1-butene, 1-pentene, 1-hexene, 1-octene, 1-decene, 2-methyl-1-propene, 3-methyl-1-pentene, 4-methyl-1-pentene, and 5-methyl-1-hexene. These may be used singly, or two or more may be used in combination.

Of the crystalline polyolefin (B), propylene homopolymers made of olefins primarily having propylene or propylene (co)polymers, which are propylene copolymers, considering the heat resistance and oil resistance, and propylene homopolymers are more preferable considering the tensile breaking strength. In the case of the propylene copolymer, a content of the propylene-derived structural unit is preferably 40 mol% or more, more preferably 50 mol% or more, and the olefins to be monomer-derived structural units other than propylene are preferably $\alpha$-olefins having 2 to 20 carbon atoms (excluding propylene), and more preferably ethylene and butene.

The polymerization mode can be random or block.

The melt flow rate (MFR) of the crystalline polyolefin (B) (ASTM D1238-65T, 230°C, 2.16 kg load) is usually 0.01 to 100 g/10 min, and preferably 0.05 to 50 g/10 min, and more preferably 0.1 to 9.0 g/10 min, and further preferably 0.1 to 6.0 g/10 min, considering the elasticity.

The melting point (Tm) of the crystalline polyolefin (B) obtained by differential scanning calorimetry (DSC) is usually 100°C or more, preferably 105°C or more, and more preferably 150 to 170°C. When a melting point is within this range, intended properties of the present invention (hardness, mechanical properties, and moldability) can be demonstrated. The value of this melting point is measured under the following conditions.

<Measurement conditions>

About 5 mg of a sample is packed in an exclusive aluminum pan, and a temperature is increased from 30°C to 200°C at a rate of 320°C/min using a PerkinElmer, Inc. DSC Pyris 1 or DSC 7, retained at 200°C for 5 minutes, then reduced from 200°C to 30°C at a rate of 10°C/min, retained at 30°C for further 5 minutes, and subsequently a melting point is determined from an endothermic curve when the temperature in increased at a rate of 10°C/min. In the case where a plurality of peaks are detected during the DSC measurement, the peak temperature detected at the highest temperature side is defined as the melting point (Tm).

The crystalline polyolefin (B) serves to enhance the mobility and heat resistance of the thermoplastic elastomer composition.

The crystalline polyolefin (B) is used in a proportion of, with respect to 100 parts by mass of the copolymer (A), usually 360 to 460 parts by mass, preferably 370 to 440 parts by mass, and more preferably 370 to 420 parts by mass. The amount of the crystalline polyolefin (B) less than the above range results in a low hardness of thermoplastic elastomer composition or a molded article made therefrom, whereas the amount more than the above range results in poor moldability (extrusion processability) of the thermoplastic elastomer composition.

<Softener (C)>

The softener (C) usable is softeners usually used for rubbers. Examples of the softener (C) include petroleum softeners such as process oils, lubricating oils, paraffin oils, liquid paraffins, petroleum asphalts, and vaselines; coal tar softeners such as coal tars and coal tar pitches; fatty oil softeners such as castor oil, linseed oil, rapeseed oil, soybean oil, and coconut oil; tall oils; substitutes (factices); waxes such as beeswax, carnauba wax, and lanolin; fatty acids or fatty acid salts such as ricinoleic acid, palmitic acid, stearic acid, barium stearate, calcium stearate, and zinc laurate; naphthenic acid; pine oil, rosin or derivatives thereof; synthetic polymer materials such as terpene resins, petroleum resins, atactic polypropylenes, and coumarone indene resins; ester softeners such as dioctyl phthalate, dioctyl adipate, and dioctyl sebacate; microcrystalline waxes, liquid polybutadienes, modified liquid polybutadienes, liquid thiokols, and hydrocarbon synthetic lubricating oils.

Of these, petroleum softeners are preferable, with paraffin oils being particularly preferable.

The softener (C) is used in a proportion of, with respect to 100 parts by mass of the copolymer (A), usually 70 to 140 parts by mass, preferably 80 to 120 parts by mass, and more preferably 90 to 110 parts by mass. When the softener (C) is used in such an amount, the composition has excellent mobility during preparation and molding, and hardly reduces the mechanical properties of molded articles to be obtained, and further molded articles to be obtained have excellent heat resistance and heat aging resistance.

<Lubricant (D)>

Commonly known lubricants having been added to plastics can be used as the lubricant (D). For example, usable are those described in Kagaku Binran, Oyo-hen ("Handbook of Chemistry: Applied Chemistry"), revised 2nd ed. (compiled by The Chemical Society of Japan, 1973, published by MARUZEN Co., Ltd.), pp. 1037 to 1038. Specific examples include polyorganosiloxanes, fluorine polymers, fatty acid amides, metal soaps, esters, calcium carbonates, and silicates.

Specific examples of the fatty acid amide include

monoamides of higher fatty acids such as stearoamide, oxystearoamide, oleylamide, erucylamide (also known as: erucic acid amide), laurylamide, palmitylamide, and behenamide;
amides of higher fatty acids such as methylolamide, methylene bis stearoamide, ethylene bis stearoamide, ethylene bis oleylamide, and ethylene bis laurylamide;
complex amides such as stearyl oleylamide, N-stearyl erucamide, and N-oleyl palmitamide; and
special fatty acid amides commercially available under product names such as Plastorosin and Plastorosin S (Fujisawa Pharmaceutical Co. Ltd.).

These may be used singly, or two or more may be used in combination.

The esters are esters of an aliphatic alcohol and dicarboxylic acid or a fatty acid. Specific examples of such esters include esters of cetyl alcohol and acetic acid, esters of cetyl alcohol and propionic acid, esters of cetyl alcohol and butyric acid, esters of beef tallow alcohol and acetic acid, esters of beef tallow alcohol and propionic acid, esters of beef tallow alcohol and butyric acid, esters of stearyl alcohol and acetic acid, esters of stearyl alcohol and propionic acid, esters of stearyl alcohol and butyric acid, esters of distearyl alcohol and phthalic acid, glyceryl monooleate, glyceryl monostearate, 12-hydroxide stearate, glyceryl tristearate, trimethylolpropane tristearate, pentaerythritol tetrastearate, butyl stearate, isobutyl stearate, stearic acid ester, oleic acid ester, behenic acid ester, calcium soap-containing ester, isotridecyl stearate, cetyl palmitate, cetyl stearate, stearyl stearate, behenyl behenate, ethylene glycol montanate, glyceryl montanate, pentaerythritol montanate, and calcium-containing montanate.

Of these, esters of distearyl alcohol and phthalic acid, glyceryl monooleate, glyceryl monostearate, stearic acid ester, and glyceryl montanate are preferable, with esters of distearyl alcohol and phthalic acid, glyceryl monostearate, glyceryl montanate being particularly preferable.

The silicate includes compounds represented by a formula $M_2O \cdot mSiO_2 \cdot nH_2O$ (wherein M represents an alkali metal atom, m and n respectively represent the number of moles of $SiO_2$ or $H_2O$ per mole of $M_2O$), and specific examples include sodium silicate, calcium silicate, and lithium silicate.

Of these, fatty acid amides are preferable, monoamides of higher fatty acids is more preferable, and erucic acid amide is particularly preferable.

The lubricant (D) is used in a proportion of, with respect to 100 parts by mass of the copolymer (A), usually 2 to 6 parts by mass, and preferably 3 to 5 parts by mass. When the lubricant (D) is used in such an amount, the thermoplastic elastomer composition of the present invention has good mechanical properties and molding processability.

<Phenolic resin cross-linking agent (E)>

The phenolic resin cross-linking agent (E) (in the present invention, also written as the "cross-linking agent (E)") is a resole resin produced by condensing an alkyl-substituted or unsubstituted phenol with an aldehyde in an alkaline medium, preferably with formaldehyde, or also by condensing bifunctional phenolic dialcohols. The alkyl-substituted phenol is preferably phenols substituted with an alkyl group having 1 to 10 carbon atoms. Further, dimethylol phenols substituted with an alkyl group having 1 to 10 carbon atoms at the para-position or phenolic resins are preferable. The phenolic resin curable resin is typically a heat cross-linking resin and thus also called a phenolic resin cross-linking agent or phenolic resin. The cross-linking agent (E) usually serves to cross-link the copolymer (A).

Examples of the phenolic resin curable resin (phenolic resin cross-linking agent) include those represented by the following general formula [E1].

[Chem. 1]

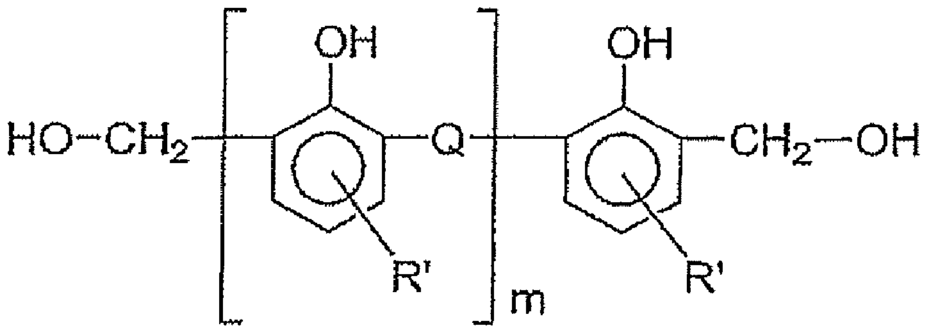

[E 1]

(wherein Q is a divalent group selected from the group consisting of $-CH_2-$ and $-CH_2-O-CH_2-$, m is 0 or a positive integer of from 1 to 20, and R' is an organic group.

Preferably, Q is a divalent group $-CH_2-O-CH_2-$, m is 0 or a positive integer of from 1 to 10, and R' is an organic group having less than 20 carbon atoms. More preferably, m is 0 or a positive integer of from 1 to 5, and R' is an organic group having 4 to 12 carbon atoms.)

Specific examples include alkylphenol formaldehyde resins, methylolized alkylphenol resins, and halogenated alkylphenol resins, with halogenated alkylphenol resins being preferable, and those in which a terminal hydroxyl group is brominated being further preferable. An example of the phenolic resin curable resin with a brominated terminal group is represented by the following general formula [E2].

[Chem. 2]

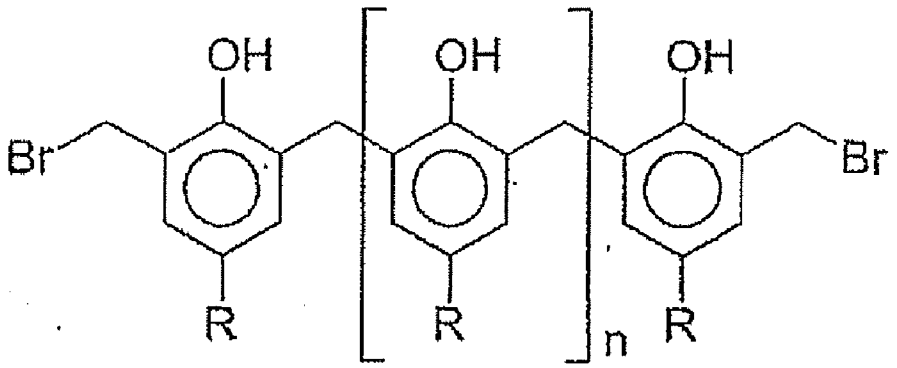

[E 2]

(wherein n is an integer of from 0 to 10, and R is a saturated hydrocarbon group having 1 to 15 carbon atoms.)

Product examples of the phenolic resin curable resins include TACKIROL (registered trademark) 201 (alkylphenol formaldehyde resin, manufactured by Taoka Chemical Co., Ltd.), TACKIROL (registered trademark) 250-I (brominated alkylphenol formaldehyde resin having a bromination rate of 4%, manufactured by Taoka Chemical Co., Ltd.), TACKIROL (registered trademark) 250-III (brominated alkylphenol formaldehyde resin, manufactured by Taoka Chemical Co., Ltd.), PR-4507 (manufactured by Gun Ei Chemical Industry Co., Ltd.), Vulkaresat 510E (manufactured by Hoechst), Vulkaresat 532E (manufactured by Hoechst), Vulkaresen E (manufactured by Hoechst), Vulkaresen 105E (manufactured by Hoechst), Vulkaresen 130E (manufactured by Hoechst), Vulkaresol 315E (manufactured by Hoechst), Amberol ST 137X (manufactured by Rohm&Haas), SUMILITE RESIN (registered trademark) PR-22193 (manufactured by Sumitomo Durez Co., Ltd.), Symphorm-C-100 (manufactured by Anchor Chem.), Symphorm-C-1001 (manufactured by Anchor Chem.), Tamanol (registered trademark) 531 (manufactured by Arakawa Chemicals Industries Ltd.), Schenectady SP1059 (manufactured by Schenectady Chemicals, Inc.), Schenectady SP1045 (manufactured by Schenectady Chemicals, Inc.), CRR-0803 (manufactured by U.C.C), Schenectady SP1055F (manufactured by Schenectady Chemicals, Inc., brominated alkylphenol formaldehyde resin), Schenectady SP1056 (manufactured by Schenectady Chemicals, Inc.), CRM-0803 (manufactured by Showa Union Gousei Co., Ltd.), and Vulkadur A (manufactured by Bayer). Of these, halogenated phenolic resin cross-linking agents are preferable, with brominated alkylphenol formaldehyde resins such as TACKIROL (registered trademark) 250-I, TACKIROL (registered trademark) 250-III, and Schenectady SP1055F is more preferably usable.

Further, specific examples of the cross-linking of a thermoplastic curable rubber with a phenolic resin are

described in US Pat. No. 4,311,628, US Pat. No. 2,972,600 and US Pat. No. 3,287,440, and these techniques can be also used in the present invention.

US Pat. No. 4,311,628 discloses a phenolic curative system including a phenolic curing resin and a cure activator. A basic component of the system is a phenolic resin cross-linking agent produced by condensing, in alkaline medium, a substituted phenol (for example, halogen-substituted phenol, and $C_1$-$C_2$ alkyl-substituted phenol) or an unsubstituted phenol with aldehyde, preferably formaldehyde, or by condensing bifunctional phenolic dialcohols (preferably dimethylol phenols substituted with a $C_5$-$C_{10}$ alkyl group at the para-position). A halogenated alkyl-substituted phenolic resin cross-linking agent produced by halogenating an alkyl-substituted phenolic resin cross-linking agent is particularly suitable. A phenolic resin cross-linking agent including a methylol phenolic curing resin, a halogen donor and a metal compound is particularly recommended, and details thereof are described in US Pat. No. 3,287,440 and 3,709,840 specifications. A non-halogenated phenolic resin cross-linking agent is used simultaneously with a halogen donor, and preferably together with a hydrogen halide scavenger. Usually, a halogenated phenolic resin cross-linking agent, and preferably a brominated phenolic resin cross-linking agent containing 2 to 10 mass% of bromine, do not require a halogen donor but are used simultaneously with a hydrogen halide scavenger such as a metal oxide such as an iron oxide, a titanium oxide, magnesium oxide, a magnesium silicate, silicon dioxide and zinc oxide, preferably with zinc oxide. These hydrogen halide scavengers such as zinc oxide is used usually in 1 to 20 parts by mass with respect to 100 parts by mass of the phenolic resin cross-linking agent. These scavengers, when present, accelerate the cross-linking activity of the phenolic resin cross-linking agent but when the copolymer (A) is not easily cross-linked with the phenolic resin cross-linking agent (E), a halogen donor and zinc oxide are desirably used together. The method for producing a halogenated phenolic curing resin and the use thereof in the curative system in which zinc oxide is used are described in US Pat. No. 2,972,600 and 3,093,613 specifications, and these disclosures are incorporated herein by reference with the disclosures of the US Pat. No. 3,287,440 and 3,709,840 specifications. Examples of the suitable halogen donor include halogen donating polymers such as stannous chloride, ferric chloride, or chlorinated paraffin, chlorinated polyethylene, chlorosulfonated polyethylene, and polychlorobutadiene (neoprene rubber). Suitable phenolic resin cross-linking agents and brominated phenolic resin cross-linking agents are commercially available and, for example, these cross-linking agents can be purchased from Schenectady Chemicals, Inc. under product names "SP-1045", "CRJ-352", "SP-1055F" and "SP-1056". Similar phenolic resin cross-linking agents having the equivalent activity can also be purchased from other suppliers.

The phenolic resin cross-linking agent (E) hardly produces decomposed products and is thus a preferable cross-linking agent considering the fogging prevention.

The heat treatment in the presence of the cross-linking agent (E) in the present invention can contain an auxiliary agent such as a peroxy cross-linking co-agent such as sulfur, p-quinonedioxime, p,p'-dibenzoyl quinonedioxime, N-methyl-N,4-dinitrosoaniline, nitrosobenzene, diphenylguanidine, or trimethylolpropane-N,N'-m-phenylenedimaleimide, a multifunctional methacrylate monomer such as divinylbenzene, triallyl cyanurate, ethylene glycol dimethacrylate, diethylene glycol dimethacrylate, polyethylene glycol dimethacrylate, trimethylolpropane trimethacrylate, and allyl methacrylate, or a multifunctional vinyl monomer such as vinyl butyrate or vinyl stearate.

Further, a decomposition accelerator can be used to accelerate the decomposition of the cross-linking agent (E). Examples of the decomposition accelerator include tertiary amines such as triethylamine, tributylamine, 2,4,6-tri(dimethylamino)phenol; aluminium, cobalt, vanadium, copper, calcium, zirconium, manganese, magnesium, lead, mercury, and the like, and naphthenates from naphthenic acid and various metals (for example, Pb, Co, Mn, Ca, Cu, Ni, Fe, Zn, and rare earths).

The cross-linking agent (E) is used in a proportion of, with respect to 100 parts by mass of the copolymer (A), usually 2 to 9 parts by mass, and preferably 2.5 to 8.5 parts by mass. When the cross-linking agent (E) is used in such an amount, the thermoplastic elastomer composition of the present invention has good mechanical properties and molding processability. Further, the cross-linking degree of the copolymer (A) in the present invention is not particularly limited and is adjustable by changing the amount of the cross-linking agent (E) within the range of the present invention.

<Optional additives>

The composition of the present invention may include additives other than the components described above without impairing the effect of the present invention.

Examples of the additives include colorants, antioxidants, inorganic fillers, reinforcing agents, antiaging agents (stabilizers), processing aids, activators, hygroscopic agents, foaming agents, foaming aids, cross-linking aids described above, and decomposition accelerator described above.

These additives may respectively be used singly, or two or more may be used in combination.

In the case of including optional additives, the amounts of additives such as stabilizers (antioxidant, antiaging agent) and processing aids added with respect to 100 parts by mass of the copolymer (A) is, for example, about 0.01 to 0.80 parts by mass, and preferably about 0.10 to 0.50 parts by mass, respectively. The amount of colorants, inorganic

fillers, reinforcing agents, activators, hygroscopic agents, foaming agents, foaming aids, cross-linking aids described above, decomposition accelerator described above and the like are not particularly limited, but each of the additives, when included, is usually 0.01 to 10 parts by mass, and preferably 1 to 8 parts by mass, with respect to 100 parts by mass of the copolymer (A).

(Thermoplastic elastomer composition (I) and production method thereof)

The thermoplastic elastomer composition (I) according to the present invention is characterized by comprising

the copolymer (A) cross-linked with the phenolic resin cross-linking agent (E), and further comprising
360 to 460 parts by mass of the crystalline polyolefin (B),
70 to 140 parts by mass of the softener (C), and
2 to 6 parts by mass of the lubricant (D) (provided that an amount of the copolymer (A) is 100 parts by mass).

The thermoplastic elastomer composition (I) according to the present invention can be obtained by dynamically heat treating the copolymer(A), the phenolic resin cross-linking agent (E), and at least a part of the crystalline polyolefin (B) .

The dynamic heat treatment is preferably carried out in a non-open apparatus under an inert gas atmosphere such as nitrogen and a carbon dioxide gas. The temperature for heat treatment is usually from the melting point of the copolymer (A) to 300°C, preferably 150 to 280°C, and more preferably 170 to 270°C. The kneading time is usually 1 to 20 minutes, and preferably 1 to 10 minutes.

The dynamic heat treatment of the mixture can be carried out by using a conventionally known kneader. Examples of the kneader include mixing rolls, intensive mixers (for example, Banbury mixer and pressurized kneader), and single- or twin-screw extruders, with non-open kneaders being preferable, and twin-screw extruders being particularly preferable.

The thermoplastic elastomer composition (I) of the present invention has the copolymer (A) and the cross-linking agent (E) described above as the ingredients and thus the copolymer (A) has been usually cross-linked in the heat-treated product obtained by dynamically heat treating the ingredients including these.

For the production of the thermoplastic elastomer composition (I) according to the present invention, the copolymer (A), the cross-linking agent (E) and at least a part of the crystalline polyolefin (B) may be dynamically heat treated, but the crystalline polyolefin (B) may be subjected to the dynamic heat treatment in whole, and the softener (C), the lubricant (D), and optional additives may be dynamically heat treated respectively with the copolymer (A), the cross-linking agent (E), and at least a part of the crystalline polyolefin (B), or mixed with the heat-treated product, or may be subjected to both of these (that is, a part is dynamically heat treated and the rest is mixed with the heat-treated product.)

The thermoplastic elastomer composition (I) according to the present invention is preferably a composition including a paraffin oil as the softener (C).

[Molded article]

The molded article according to the present invention is characterized by comprising the thermoplastic elastomer composition (I) according to the present invention.

The molded article according to the present invention can be formed from the thermoplastic elastomer composition (I) according to the present invention. A conventionally known molding method is applicable as the molding method.

The molded article according to the present invention has excellent sliding performance and processability.

[Laminate and applications thereof]

The laminate according to the present invention is characterized by comprising a layer including the thermoplastic elastomer composition (I) according to the present invention (that is, the layer of the molded article according to the present invention) and a layer including a soft material, wherein these layers are laminated.

Examples of the soft material include soft materials having a hardness (A hardness) of 65 to 95, and preferably 65 to 85.

Examples of the soft material include thermoplastic elastomers (hereinafter, also written as the "thermoplastic elastomer composition (II)".)

Examples of the thermoplastic elastomer composition (II) include preferably the thermoplastic elastomer composition (I) according to the present invention, those in which the phenolic resin cross-linking agent (E) is replaced with other cross-linking agents in the thermoplastic elastomer composition (I) according to the present invention, and those

of these thermoplastic elastomer compositions having different proportion ratios of the ingredients. The thermoplastic elastomer composition (II) including the phenolic resin cross-linking agent (E) as a cross-linking agent is preferable.

The thermoplastic elastomer composition (II) further preferably includes those produced by dynamically heat treating, in the presence of a cross-linking agent, 10 to 60 parts by mass of a polyolefin resin (X), 30 to 70 parts by mass of an ethylene·α-olefin·nonconjugated polyene copolymer rubber (or a rubber component to which other rubbers such as polyisobutylene, butyl rubbers, and propylene-ethylene copolymers are added) (Y), and 5 to 50 parts by mass of an oil softener (Z) [the total of (X), (Y), and (Z) is 100 parts by mass]. The components (X), (Y), and (Z) herein respectively mean the same as (B), (A), and (C) components used in the thermoplastic elastomer composition (I) of the present invention.

The mass fraction ($W_c$) of the softener in the thermoplastic elastomer composition used in the present invention is defined as follows. That is, in the thermoplastic elastomer used in the present invention, the $W_c$ is defined as a value of a mass proportion, expressed in terms of the percentage, of the softener (C) with respect to the total mass amount of the ethylene·α-olefin·nonconjugated polyene copolymer (A), the crystalline polyolefin (B), the softener (C), and the cross-linking agent (E') (the cross-linking agent (E') conceptually encompasses the phenolic resin cross-linking agent (E)). Further, the $W_c$ in the thermoplastic elastomer composition (I) is expressed as $W_{1c}$, and the $W_c$ in the thermoplastic elastomer composition (II) is expressed as $W_{2c}$.

The mass fraction ($W_{2c}$) of the softener (C) in the thermoplastic elastomer composition (II) is preferably 30 to 50 mass%, and more preferably 33 to 45 mass%.

In this laminate, a ratio of the mass fraction ($W_{1c}$) of the softener (C) in the thermoplastic elastomer composition (I) to the mass fraction ($W_{2c}$) of the softener in the thermoplastic elastomer composition (II) ($W_{1c}/W_{2c}$) is preferably 0.60 or less, and more preferably 0.50 or less. When the ratio ($W_{1c}/W_{2c}$) is within the above range, the softener (oil) migration reduces from the layer including the thermoplastic elastomer composition (I) to the layer including the soft material (thermoplastic elastomer composition (II)), and the sliding performance of the layer including the thermoplastic elastomer composition (I) is not hindered. The lower limit of the $W_{1c}/W_{2c}$ is not particularly limited and preferably 0.30, and more preferably 0.40.

The laminate of the present invention may further have other layers in addition to the above two layers.

The thickness of the layer including the thermoplastic elastomer composition (I), although depending on the laminate application, is for example, 30 um to 1000 um, and the thickness of the layer including the soft material (thermoplastic elastomer composition (II)) is, for example, 0.1 mm to 3.0 mm.

The thermoplastic elastomer composition (I) and the molded article thereof according to the present invention have excellent heat aging resistance, suitable hardness, and also excellent mechanical strengths, and the laminate according to the present invention using these is particularly useful for automotive seal members (glass run channel) and thus considered capable of reducing niggling noises (creaking noise, rattling noise) made when a glass run channel contact hard the glass at the bottom.

The laminate of the present invention is preferably applicable to articles such as window frame seals and building gaskets in addition to glass run channel.

## Examples

Subsequently, the present invention is described further in detail with reference to examples but is not limited thereto.

[Measurement or evaluation method]

<Ingredients>

Properties of the ingredients were measured by the following methods.

(Proportion of each structural unit in the ethylene·α-olefin·nonconjugated polyene copolymer)

$^{13}C$-NMR was used to measure a proportion of the ethylene-derived structural unit, a proportion of α-olefin-derived structural unit, and a proportion of the nonconjugated polyene-derived structural unit included in the ethylene·α-olefin-nonconjugated polyene copolymer.

<Thermoplastic elastomer composition>

The thermoplastic elastomer composition was measured or evaluated by the following method.

(MFR)

Pellet of the thermoplastic elastomer composition was measured for a melt flow rate (MFR) in accordance with JIS K7112 using a melt indexer (manufactured by Toyo Seiki Seisaku-sho, Ltd.) at 230°C under a load of 10 kg.

(A Hardness)

The obtained pellet of the thermoplastic elastomer composition was press-molded at 230°C for 6 minutes using a 100-t electrothermal automated press (manufactured by SHOJI Co., Ltd.) and then cool pressed for 5 minutes at room temperature to make a pressed sheet having a thickness of 2 mm. The sheet was tested in accordance with ISO 7619 using an A-type meter to read out a scale immediately after a press needle contact.

(D Hardness)

A sheet sample of 20 cm × 20 cm × 2 mm adjusted from the pellet of the thermoplastic elastomer composition using a 50-t press machine was used as a test sample and measured for a hardness in accordance with JIS K 6252-3 using a durometer D hardness tester.

(Tensile properties)

A sheet sample of 20 cm × 20 cm × 2 mm adjusted from the pellet of the thermoplastic elastomer composition using a 50-t press machine was used as a test sample and tested for a tensile in accordance with JIS 6251 under conditions of 25°C and a tensile rate of 500 mm/min to measure M100 (stress in 100% elongation), TB (tensile breaking strength), and EB (tensile elongation at breakage).

(Gel fraction)

A sheet sample of 20 cm × 20 cm × 2 mm adjusted from the pellet of the thermoplastic elastomer composition using a 50 t-press machine was used as a test sample, the test sample was placed in a 325-mesh metal basket and immersed in a paraxylene solvent at 140°C for 24 hours, and a residue in the metal basket was measured for a weight to calculate a residual gel fraction by the following formula.

$$\text{Gel fraction (\%)} = (\text{weight of residue [g]}/\text{weight of test sample [g]}) \times 100$$

(Expansion rate)

A sheet sample of 20 cm × 20 cm × 2 mm adjusted from the pellet of the thermoplastic elastomer composition using a 50-t press machine was used as a test sample and immersed in a paraffin oil at 125°C for 72 hours. The weights before and after the immersion were measured to calculate an expansion rate by the following formula.

$$\text{Expansion rate (\%)} = (\text{weight after immersion [g]})/(\text{weight before immersion [g]}) \times 100$$

(Heat aging resistance)

The laminates produced in examples and the like were allowed to stand in the air at 80°C for 72 hours, and the surface condition of the sliding layer (thermoplastic elastomer composition (I)) side of the laminate was examined visually and by touching with fingers to compare with the surface conditions before allowed to stand. The symbols in Table 1 mean as follows.

AA: Surface conditions remained unchanged
BB: Surface gloss was identified but no stickiness was caused
CC: Surface gloss was identified and stickiness was caused

(Extrusion processability)

The pellet of the thermoplastic elastomer composition was calculated for a swell ratio by the following formula using a die swell value at a shear velocity of $24s^{-1}$ and a die swell value at a shear velocity of $2400s^{-1}$ when measured by a capillary rheometer set to 200°C and having a L/D = 30.

$$\text{Swell ratio} = [\text{die swell value at shear velocity of } 2400s^{-1}]/[\text{die swell value at shear velocity of } 24s^{-1}]$$

The higher the swell ratio, the greater the difference between the low shear zone and the high shear zone indicating poor extrusion processability.

[Ingredients]

For the ethylene·α-olefin·nonconjugated polyene copolymer, used was an ethylene·α-olefin·nonconjugated polyene copolymer (ethylene·propylene·diene copolymer, hereinafter, written as the "EPDM-1") produced by known technique using a metallocene catalyst as a polymerization catalyst and having a molar ratio of an ethylene-derived structural unit (e) to an α-olefin-derived structural unit (o) [(e)/(o)] of 64/36, a proportion of the nonconjugated polyene-derived structural unit in all structural units of 5.4 mol%, and an intrinsic viscosity [η] measured in decalin at 135°C of 2.5 dL/g.

For the crystalline polyolefin (B), the following h-PP1 to h-PP3, homopolymers of propylene, produced by a known technique were used.

- h-PP1: propylene homopolymer having MFR (230°C, 2.16 kg load) = 0.5 g/10 min, melting point 160°C
- h-PP2: propylene homopolymer having MFR (230°C, 2.16 kg load) = 2.0 g/10 min, melting point 160°C
- h-PP3: propylene homopolymer having MFR (230°C, 2.16 kg load) = 9.0 g/10 min, melting point 160°C

Further, the following ingredients were used.

- Softener: PW90 (product name, manufactured by Idemitsu Kosan Co., Ltd.) (paraffin oil)
- Lubricant: erucic acid amide
- Cross-linking agent: bromated alkylphenol formaldehyde resin (product name, SP-1055F, manufactured by Schenectady Chemicals, Inc.)
- Colorant: carbon black masterbatch (manufactured by DIC Corporation, F23287MM)
- Antioxidant: a mixture of a phenolic antioxidant (Irganox 1010 (manufactured by BASF Japan Ltd.), a benzotriazole UV absorber (Tinuvin 326 (manufactured by BASF Japan Ltd.), and a hindered amine (HALS) weather stabilizer (Tinuvin 770 (manufactured by BASF Japan Ltd.)

[Example 1]

(Production of thermoplastic elastomer composition-1)

EPDM-1, h-PP1, the softener, the lubricant, the cross-linking agent, the colorant, and the antioxidant were fed to a twin-screw extruder (manufactured by KOBE STEEL, LTD., HYPER KTX 46) in the proportion shown in Table 1 and melt-kneaded under conditions of cylinder temperature: 50 to 250°C (that is, the temperature of dynamic heat treatment descried in the above section of "Thermoplastic elastomer composition (I) and production method thereof" is 250°C), die temperature: 200°C, screw rotational speed: 550 rpm, and extrusion output: 40 kg/hr to obtain pellets of the thermoplastic elastomer composition (hereinafter, also written as the "thermoplastic elastomer composition-1.") The evaluation results are shown in Table 1.

(Production of laminate)

For the ingredient of the layer including the soft material (thermoplastic elastomer composition (II)), thermoplastic elastomer compositions having a softener mass fraction ($W_{2c}$) of 33 mass% or 42 mass% were prepared.

Specifically, 24 parts by mass of the polyolefin resin (the above h-PP1), 37 parts by mass of the ethylene·α-olefin·nonconjugated polyene copolymer (the above EPDM-1), and 33 parts by mass of the softener were dynamically

heat treated in the presence of 6 parts by mass of the cross-linking agent (the above brominated alkylphenol formaldehyde resin) under the same conditions as the production of the thermoplastic elastomer composition-1 described above to produce a thermoplastic elastomer composition (hereinafter, written as the "TPV-1.") Further, 19 parts by mass of the polyolefin resin (the above h-PP1), 33 parts by mass of the ethylene·α-olefin·nonconjugated polyene copolymer (the above EPDM-1), and 42 parts by mass of the softener were dynamically heat treated in the presence of 6 parts by mass of the cross-linking agent (the above brominated alkylphenol formaldehyde resin) under the same conditions as the production of the thermoplastic elastomer composition-1 described above to produce a thermoplastic elastomer composition (hereinafter, written as the "TPV-2.")

Using a co-extruder, a laminate (a sliding layer thickness 200 to 250 μm, total laminate thickness 2 mm) of the layer including the soft material (the above TPV-1 or TPV-2) laminated on the sliding layer including the thermoplastic elastomer composition-1 was made.

The evaluation results on heat aging resistance using these laminates as test samples are shown in Table 1.

[Examples 2 to 10, Comparative Examples 1 to 3]

Pellets of the thermoplastic elastomer compositions were obtained and further the laminates were made in the same manner as in Example 1 except that the kind and amount of the ingredients were changed as shown in Table 1. The evaluation results are shown in Table 1.

[Table 1]

[Table 1]

| | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|---|
| Amount of ingredients (unit: part by mass) | | | | | | | | | | | | | | | |
| EPDM-1 | | | 100 | 100 | 100 | 100 | 100 | 100 | 100 | 100 | 100 | 100 | 100 | 100 | 100 |
| h-PP1 (MFR = 0.5 g/10 min) | | | 385 | 370 | 420 | | 385 | 385 | 385 | 385 | 385 | | 350 | 470 | |
| h-PP2 (MFR = 2.0 g/10 min) | | | | | | 385 | | | | | | | | | 450 |
| h-PP3 (MFR = 9.0 g/10 min) | | | | | | | | | | | | 385 | | | |
| Softener | | | 100 | 100 | 100 | 100 | 100 | 100 | 80 | 120 | 100 | 100 | 100 | 100 | 160 |
| Lubricant | | | 5.0 | 5.0 | 5.0 | 5.0 | 5.0 | 5.0 | 5.0 | 5.0 | 3.0 | 5.0 | 5.0 | 5.0 | 5.0 |
| Cross-linking agent | | | 8.0 | 8.0 | 8.0 | 8.0 | 3.0 | 6.0 | 6.0 | 6.0 | 6.0 | 8.0 | 8.0 | 8.0 | |
| Colorant | | | 5.0 | 5.0 | 5.0 | 5.0 | 5.0 | 5.0 | 5.0 | 5.0 | 5.0 | 5.0 | 5.0 | 5.0 | 5.0 |
| Antioxidant | | | 0.4 | 0.4 | 0.4 | 0.4 | 0.4 | 0.4 | 0.4 | 0.4 | 0.4 | 0.4 | 0.4 | 0.4 | 0.4 |
| Evaluation results of thermoplastic elastomer compositions | | | | | | | | | | | | | | | |
| MFR | 230°C×10kgf | g/10 min | 27 | 32 | 38 | 45 | 40 | 48 | 20 | 45 | 25 | 38 | 25 | 32 | 45 |
| D Hardness | (5 seconds later) | - | 51 | 50 | 52 | 51 | 50 | 51 | 54 | 52 | 52 | 50 | 48 | 53 | 48 |
| Tensile test | M100 | MPa | 13 | 13 | 13 | 13 | 12 | 12 | 14 | 12 | 13 | 11 | 12 | 14 | 11 |
| | TB | MPa | 22 | 21 | 24 | 23 | 21 | 20 | 25 | 20 | 22 | 21 | 23 | 25 | 21 |
| | EB | % | 610 | 580 | 630 | 600 | 650 | 600 | 550 | 610 | 630 | 680 | 550 | 650 | 580 |
| Gel fraction | | % | 18 | 19 | 18 | 20 | 18 | 25 | 23 | 20 | 18 | 23 | 23 | 19 | 18 |
| Expansion rate (125°C × 72 hrs) | | % | 40 | 42 | 45 | 48 | 48 | 55 | 40 | 48 | 40 | 48 | 46 | 47 | 48 |

(continued)

| Evaluation results of thermoplastic elastomer compositions | | | | | | | | | | | | | | | | |
|---|---|---|---|---|---|---|---|---|---|---|---|---|---|---|---|---|
| Heat aging resistance (presence of stickiness) | Layer including soft material | TPV-1*1 | - | Absent | Absent | Absent | Absent | Absent | Absent | Absent | Absent | Absent | Absent | Absent | Absent | Present |
| | | TPV-2*2 | - | Absent | Absent | Absent | Absent | Absent | Absent | Absent | Absent | Absent | Absent | Absent | Absent | Present |
| Extrusion processability | Swell ratio *3 | | - | 1.4 | 1.4 | 1.3 | 1.5 | 1.5 | 1.5 | 1.5 | 1.5 | 1.5 | 1.5 | 1.4 | 1.7 | 1.3 |

*1: TPV-1 (A hardness = 80, softener mass fraction (($W_{2c}$) = 33%)
*2: TPV-2 (A hardness = 70, softener mass fraction (($W_{2c}$) = 42%)
*3: Swell ratio = [die swell value at shear velocity: $2400s^{-1}$]/[die swell value at shear velocity: $24s^{-1}$]

The thermoplastic elastomer compositions of the examples were well-balanced in various properties.

In contrast, the thermoplastic elastomer composition of Comparative Example 1 having a too small amount of the crystalline polyolefin (B) had a low hardness.

The thermoplastic elastomer composition of Comparative Example 2 having a too large amount of the crystalline polyolefin (B) had poor extrusion processability.

The thermoplastic elastomer composition of Comparative Example 3 having a too large amount of the softener (C) and no cross-linking agent (D) caused oil bleeding and had a poorer hardness.

## Claims

1. A thermoplastic elastomer composition (I) comprising:
a cross-linked product of an ethylene·α-olefin-nonconjugated polyene copolymer (A) (provided that the α-olefin has 3 to 20 carbon atoms) with a phenolic resin cross-linking agent (E), the composition (I) further comprising:

    360 to 460 parts by mass of a crystalline polyolefin (B),
    70 to 140 parts by mass of a softener (C), and
    2 to 6 parts by mass of a lubricant (D) (provided that an amount of the copolymer (A) is 100 parts by mass).

2. The thermoplastic elastomer composition (I) according to claim 1, wherein the ethylene·α-olefin·nonconjugated polyene copolymer (A) satisfies the following requirement (a1):
requirement (a1): a molar ratio of an ethylene-derived structural unit (e) to an α-olefin-derived structural unit (o) [(e)/(o)] is 50/50 to 85/15.

3. The thermoplastic elastomer composition (I) according to claim 1 or 2, wherein the crystalline polyolefin (B) has a melting point of 150 to 170°C when measured by differential scanning calorimetry.

4. The thermoplastic elastomer composition (I) according to any one of claims 1 to 3, wherein the crystalline polyolefin (B) is a propylene polymer.

5. The thermoplastic elastomer composition (I) according to any one of claims 1 to 4, wherein the softener (C) is a paraffin oil.

6. The thermoplastic elastomer composition (I) according to any one of claims 1 to 5, wherein the lubricant (D) is erucic acid amide.

7. The thermoplastic elastomer composition (I) according to any one of claims 1 to 6, obtained by dynamically heat treating the ethylene·α-olefin·nonconjugated polyene copolymer (A) and at least a part of the crystalline polyolefin (B) in the presence of the phenolic resin cross-linking agent (E).

8. The thermoplastic elastomer composition (I) according to any one of claims 1 to 7, wherein an amount of the phenolic resin cross-linking agent (E) is 2 to 9 parts by mass with respect to 100 parts by mass of the copolymer (A).

9. A molded article comprising the thermoplastic elastomer composition (I) according to any one of claims 1 to 8.

10. A laminate comprising a layer comprising the thermoplastic elastomer composition (I) according to any one of claims 1 to 8 and a layer comprising a soft material, wherein these layers are laminated.

11. The laminate according to claim 10, wherein the soft material has a hardness (A hardness) of 65 to 95.

12. The laminate according to claim 11, wherein the soft material comprises a thermoplastic elastomer.

13. The laminate according to claim 12, wherein the soft material comprises a thermoplastic elastomer composition (II) comprising a thermoplastic elastomer, and the composition (II) comprises a softener, and a mass fraction ($W_{2c}$) of the softener in the composition (II) is 30 to 50 mass%.

14. The laminate according to claim 13, wherein a ratio of a mass fraction ($W_{1c}$) of the softener (C) in the thermoplastic elastomer composition (I) to the mass fraction ($W_{2c}$) of the softener in the thermoplastic elastomer composition (II)

($W_{1c}$/$W_{2c}$) is 0.60 or less.

**15.** An article comprising the laminate according to any one of claims 10 to 14.

**16.** The article according to claim 15, being a window frame seal, a glass run channel, or a building gasket.

**Patentansprüche**

**1.** Thermoplastische Elastomerzusammensetzung (I), umfassend:
ein vernetztes Produkt von einem Ethylen·α-Olefin·nicht-konjugiertes Polyen-Copolymer (A) (mit der Maßgabe, dass das α-Olefin 3 bis 20 Kohlenstoffatome aufweist) mit einem Phenolharz-Vernetzungsmittel (E), wobei die Zusammensetzung (I) ferner umfasst:

360 bis 460 Masseteile eines kristallinen Polyolefins (B),
70 bis 140 Masseteile eines Weichmachers (C), und
2 bis 6 Massenteile eines Gleitmittels (D) (mit der Maßgabe, dass die Menge des Copolymers (A) 100 Massenteile beträgt).

**2.** Thermoplastische Elastomerzusammensetzung (I) gemäß Anspruch 1, wobei das Ethylen·α-Olefin·nicht-konjugiertes Polyen-Copolymer (A) die folgende Bedingung (a1) erfüllt:
Bedingung (a1): das Molverhältnis von einer von Ethylen abgeleiteten Struktureinheit (e) zu einer von α-Olefin abgeleiteten Struktureinheit (o) [(e)/(o)] beträgt 50/50 bis 85/15.

**3.** Thermoplastische Elastomerzusammensetzung (I) gemäß Anspruch 1 oder 2, wobei das kristalline Polyolefin (B) einen Schmelzpunkt von 150 bis 170°C, gemessen durch dynamische Differenzkalorimetrie, aufweist.

**4.** Thermoplastische Elastomerzusammensetzung (I) gemäß einem der Ansprüche 1 bis 3, wobei das kristalline Polyolefin (B) ein Propylenpolymer ist.

**5.** Thermoplastische Elastomerzusammensetzung (I) gemäß einem der Ansprüche 1 bis 4, wobei der Weichmacher (C) ein Paraffinöl ist.

**6.** Thermoplastische Elastomerzusammensetzung (I) gemäß einem der Ansprüche 1 bis 5, wobei das Gleitmittel (D) ein Erucasäureamid ist.

**7.** Thermoplastische Elastomerzusammensetzung (I) gemäß einem der Ansprüche 1 bis 6, erhalten durch dynamische Wärmebehandlung des Ethylen·α-Olefin·nicht-konjugiertes Polyen-Copolymers (A) und mindestens eines Teils des kristallinen Polyolefins (B) in Gegenwart des Phenolharz-Vernetzungsmittels (E).

**8.** Thermoplastische Elastomerzusammensetzung (I) gemäß einem der Ansprüche 1 bis 7, wobei die Menge des Phenolharz-Vernetzungsmittels (E) 2 bis 9 Massenteile, bezogen auf 100 Massenteile des Copolymers (A), beträgt.

**9.** Formgegenstand, umfassend die thermoplastische Elastomerzusammensetzung (I) gemäß einem der Ansprüche 1 bis 8.

**10.** Laminat, das eine Schicht, umfassend die thermoplastische Elastomerzusammensetzung (I) gemäß einem der Ansprüche 1 bis 8, und eine Schicht, umfassend ein weiches Material, umfasst, wobei diese Schichten laminiert sind.

**11.** Laminat gemäß Anspruch 10, wobei das weiche Material eine Härte (A-Härte) von 65 bis 95 aufweist.

**12.** Laminat gemäß Anspruch 11, wobei das weiche Material ein thermoplastisches Elastomer umfasst.

**13.** Laminat gemäß Anspruch 12, wobei das weiche Material eine thermoplastische Elastomerzusammensetzung (II) umfasst, die ein thermoplastisches Elastomer umfasst, und wobei die Zusammensetzung (II) einen Weichmacher umfasst, und ein Massenanteil ($W_{2c}$) des Weichmachers in der Zusammensetzung (II) 30 bis 50 Massen-% beträgt.

**14.** Laminat gemäß Anspruch 13, wobei das Verhältnis von dem Massenanteil ($W_{1c}$) des Weichmachers (C) in der

thermoplastischen Elastomerzusammensetzung (I) zu dem Massenanteil ($W_{2c}$) des Weichmachers in der thermoplastischen Elastomerzusammensetzung (II) ($W_{1c}/W_{2c}$) 0,60 oder weniger beträgt.

**15.** Gegenstand, umfassend das Laminat gemäß einem der Ansprüche 10 bis 14.

**16.** Gegenstand gemäß Anspruch 15, der eine Fensterrahmendichtung, eine Glaslaufrinne oder eine Gebäudedichtung ist.

## Revendications

**1.** Composition d'élastomère thermoplastique (I) comprenant :
un produit réticulé d'un copolymère de polyène non conjugué d'éthylène-$\alpha$-oléfine (A) (à condition que la $\alpha$-oléfine présente 3 à 20 atomes de carbone) avec un agent de réticulation à base de résine phénolique (E), la composition (I) comprenant en outre :

360 à 460 parts en masse d'une polyoléfine cristalline (B),
70 à 140 parts en masse d'un ramollissant (C), et
2 à 6 parts en masse d'un lubrifiant (D) (à condition qu'une quantité du copolymère (A) soit de 100 parts en masse).

**2.** Composition d'élastomère thermoplastique (I) selon la revendication 1, dans laquelle le copolymère de polyène non conjugué d'éthylène-$\alpha$-oléfine (A) satisfait à l'exigence (a1) suivante :
exigence (a1) : un rapport molaire d'une unité structurale dérivée d'éthylène sur une unité structurale dérivée de $\alpha$-oléfine (o) [(e)/(o)] est de 50/50 à 85/15.

**3.** Composition d'élastomère thermoplastique (I) selon la revendication 1 ou la revendication 2, dans laquelle la polyoléfine cristalline (B) présente un point de fusion de 150 à 170 °C lorsqu'il est mesuré par calorimétrie différentielle à balayage.

**4.** Composition d'élastomère thermoplastique (I) selon l'une quelconque des revendications 1 à 3, dans laquelle la polyoléfine cristalline (B) est un polymère de propylène.

**5.** Composition d'élastomère thermoplastique (I) selon l'une quelconque des revendications 1 à 4, dans laquelle le ramollissant (C) est une huile de paraffine.

**6.** Composition d'élastomère thermoplastique (I) selon l'une quelconque des revendications 1 à 5, dans laquelle le lubrifiant (D) est de l'amide d'acide érucique.

**7.** Composition d'élastomère thermoplastique (I) selon l'une quelconque des revendications 1 à 6, obtenue par le traitement thermique dynamique du copolymère de polyène non conjugué d'éthylène-$\alpha$-oléfine (A) et d'au moins une partie de la polyoléfine cristalline (B) en présence de l'agent de réticulation à base de résine phénolique (E).

**8.** Composition d'élastomère thermoplastique (I) selon l'une quelconque des revendications 1 à 7, dans laquelle une quantité de l'agent de réticulation à base de résine phénolique (E) est de 2 à 9 parts en masse par rapport à 100 parts en masse du copolymère (A).

**9.** Article moulé comprenant la composition d'élastomère thermoplastique (I) selon l'une quelconque des revendications 1 à 8,

**10.** Stratifié comprenant une couche comprenant la composition d'élastomère thermoplastique (I) selon l'une quelconque des revendications 1 à 8 et une couche comprenant un matériau mou, dans lequel ces couches sont stratifiées.

**11.** Stratifié selon la revendication 10, dans lequel le matériau mou présente une dureté (dureté A) de 65 à 95.

**12.** Stratifié selon la revendication 11, dans lequel le matériau mou comprend un élastomère thermoplastique.

**13.** Stratifié selon la revendication 12, dans lequel le matériau mou comprend une composition d'élastomère thermoplastique (II) comprenant un élastomère thermoplastique, et la composition (II) comprend un ramollissant, et une

fraction en masse ($W_{2c}$) du ramollissant dans la composition (II) est de 30 à 50 % en masse.

**14.** Stratifié selon la revendication 13, dans lequel un rapport d'une fraction en masse ($W_{1c}$) du ramollissant (C) dans la composition d'élastomère thermoplastique (I) sur la fraction en masse ($W_{2C}$) du ramollissant dans la composition d'élastomère thermoplastique (II) ($W_{1c}/W_{2c}$) est de 0,60 ou moins.

**15.** Article comprenant le stratifié selon l'une quelconque des revendications 10 à 14.

**16.** Article selon la revendication 15, étant un joint de cadre de fenêtre, une glissière de guidage de vitre ou un joint d'étanchéité de construction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001138440 A
- JP 2016000485 A
- JP H9176408 A
- WO 2018181121 A
- US 4311628 A
- US 2972600 A
- US 3287440 A
- US 3709840 A
- US 3093613 A

### Non-patent literature cited in the description

- **KAGAKU BINRAN ; OYO-HEN.** Handbook of Chemistry: Applied Chemistry. MARUZEN Co., Ltd, 1973, 1037-1038